# FASCICULE DE BREVET EUROPEEN

(11) **EP 2 901 047 B1**
(45) Date de publication et mention de la délivrance du brevet: **03.01.2018**
(21) Numéro de dépôt: 13785490.7
(22) Date de dépôt: 26.09.2013
(51) Int. Cl.: F16J 15/14

(54) **JOINT POLYURETHANE OU SILICONE**
POLYURETHAN- ODER SILIKONDICHTUNG
POLYURETHANE OR SILICONE SEALING

(30) Priorité: 27.09.2012 FR 1259135
(43) Date de publication de la demande: 05.08.2015
(73) Titulaire: Renault s.a.s., 92513 Boulogne Bilancourt Cedex (FR); Sonderhoff Chemicals GmbH, 50829 Köln (DE)
(72) Inventeur: FALCO, Guillaume, F-92500 Rueil Malmaison (FR); OTT, Philippe, F-07230 Plazolles (FR)
(74) Mandataire: Novagraaf Technologies
(86) Numéro de dépôt international: PCT/FR2013/052279
(87) Numéro de publication internationale: WO 2014/049281

(56) Documents cités:
- DE-A1-102007 020 227

## Description

La présente invention concerne les joints d'étanchéité et en particulier ceux utilisés dans l'automobile où les contraintes sont importantes.

Aujourd'hui, il est nécessaire que ces joints puissent résister à la fois à une immersion sous 1 mètre d'eau (norme ISO IP67) et à un jet d'eau de 100 bar à 30 cm (norme ISO IP9K).

Pour répondre à ces contraintes on utilise soit un joint rapporté en élastomère ou métallique, comme celui décrit dans la demande EP2355206A, soit un joint liquide tel que de la colle. Cependant ces solutions ne sont pas satisfaisantes pour les pièces présentant une certaine souplesse comme les pièces en aluminium, les pièces minces en plastique et les pièces en tôles fines et de grandes dimensions. En effet, les joints rapportés en élastomère ou métalliques ont l'inconvénient d'exercer des efforts de compression élevés qui entrainent la déformation de ce type de pièce et les colles ne permettent pas le démontage ou alors en endommageant fortement les pièces assemblées.

On connait également des joints de type « joint de porte » réalisés en caoutchouc par extrusion, mais leur coût est élevé, leur mise en place délicate et difficilement répétable car on doit l'épingler manuellement sur une feuillure de la porte.

Il existe également le joint décrit dans la demande de brevet DE 10 2007 02 0277, c'est un joint avec trois cordons dont un cordon central avec un taux de compression différent des deux autres. Ce joint ne permet pas de résister à un jet haute pression de 100bar à 30cm car les cordons extérieurs sont trop rigide pour « casser » l'énergie cinétique dudit jet.

L'objet de la présente invention est de proposer un joint qui réponde aux contraintes actuelles tout étant suffisamment souple et en permettant un démontage des pièces. L'objet concerne également le procédé de réalisation de ce joint et un véhicule équipé dudit joint.

Le joint d'étanchéité selon l'invention est destiné à être placé entre deux pièces, ledit joint est constitué au moins partiellement d'un matériau souple et élastique de type mousse en polyuréthane (ci après appelé PU) ou silicone (ci après appelé Sil) et il comprend deux cordons juxtaposés et les deux cordons ont des taux de compression différents et que le premier cordon a un taux de compression plus élevé que le deuxième cordon et que ledit deuxième cordon est disposé vers l'extérieur d'une enceinte formée par les deux pièces. De préférence les deux cordons sont solidaires. Un des deux cordons assure l'étanchéité statique (type IP 65) et l'autre constitue un appendice qui permet de « casser » le jet haute pression (type IK9K). La grande souplesse du matériau permet de garantir ce type d'étanchéité sur des pièces peu rigides et la non adhésion sur le support permet des montages et démontages successifs sans endommager le joint ni les pièces en contact.

Le deuxième cordon est disposé vers l'extérieur de enceinte formée par les deux pièces, ainsi le jet haute pression (utilisé par exemple pour le lavage de la voiture) est dirigé à l'extérieur de celle-ci, le deuxième cordon est donc placé vers l'extérieur pour remplir sa fonction.

Selon une caractéristique particulière, le taux de compression peut être de 30 à 60% pour le PU et 5 à 20% pour le Sil pour un premier des cordons. Ce taux de compression permet de résister à la pression statique (IP65), il est obtenu en dimensionnant une hauteur de mousse qui autorise ce taux de compression sans endommager la structure de la mousse. Ce cordon est considéré comme le cordon principal car ses dimensions sont les plus importantes des deux cordons.

Selon une autre caractéristique, le taux de compression peut être de 10 à 30% pour le PU et 5 à 10% pour le Sil pour le deuxième cordon. Le deuxième cordon assure la résistance au jet (IP9K), il va en effet « casser » l'énergie cinétique du jet haute pression en faisant office de chicane. Comme ce cordon est faiblement comprimé, à son contact la vitesse du jet décroit fortement et se transforme en pression statique résiduelle étanchée sans problème par le premier cordon.

Selon une disposition particulière, le joint est démontable. Le joint étant en mousse de type FIPFG (Form In Place Foam Gasket) il est déposé liquide directement sur la pièce à l'aide d'un robot, il réticule (sèche) en quelques minutes après lesquelles il présente toutes ses propriétés mécaniques et géométriques. Il peut-etre démontable mais il peut alternativement adhérer au support par un prétraitement éventuel du support par un primaire d'adhérence -ou une autre technologie comme par exemple le flammage ou le Plasma ou autres- ou un produit démoulant selon le besoin.

Selon une caractéristique particulière, le joint est maintenu en place par des vis ou autre appendice permettant de le maintenir en place mécaniquement (pas d'adhérence cohésive entre le joint et le support dans ce cas). Le joint peut ainsi être monté et démonté facilement.

Le procédé de pose d'un joint d'étanchéité selon l'invention est caractérisé en ce qu'il comprend des étapes de :
- pose d'un premier cordon sous forme de mousse liquide sur l'une des deux pièces,
- pose d'un deuxième cordon sous forme de mousse liquide ladite pièce, en contact avec le premier cordon et avant le séchage dudit premier cordon.
Pour que le joint soit constitué de deux cordons juxtaposés et indissociable il est préférable de poser le deuxième cordon alors que le premier n'est pas encore sec afin d'assurer une continuité entre les deux cordons.

Selon une caractéristique particulière, la pose peut comprendre au moins une étape où la vitesse de pose varie. Le réglage du taux de compression peut ainsi se faire par le réglage de la vitesse de pose : pour un débit donné si la vitesse de pose est élevée, la quantité de mousse posée sera faible et donc son taux de compression aussi ; au contraire si la vitesse est faible, la quantité de mousse sera élevée ainsi que le taux de compression. Le taux de compression peut se faire en faisant varier le débit de matière coulée.

Selon une autre caractéristique, la vitesse de pose augmente aux abords des vis de fixation ou d'un autre appendice et diminue entre lesdites vis. Afin d'éviter que la vis ne dépasse du joint et ainsi garantir l'étanchéité, il est préférable de s'assurer que le joint est plus haut que la tête de vis : pour cela, la vitesse de pose augmente aux abords de la vis ou de l'appendice de fixation, la hauteur de mousse y sera ainsi moins élevée, tandis que la vitesse diminue entre deux têtes de vis ou de l'appendice de fixation, afin d'y avoir une hauteur de mousse suffisante pour dépasser des têtes de vis.

L'invention concerne également un véhicule automobile équipée d'un joint tel que décrit précédemment. Cette invention n'est toutefois pas limitée à cette application, elle est transposable dans d'autres secteurs.

D'autres avantages pourront encore apparaître à l'homme du métier à la lecture des exemples ci-dessous, illustrés par les figures annexées, donnés à titre illustratif.

### Brève description des figures

- La figure 1 est une vue de côté d'un exemple de joint selon l'invention.
- La figure 2 est une vue en coupe du joint dans le plan II-II illustré par la figure 1.
- La figure 3 est une vue en coupe du joint dans le plan III-III illustré par la figure 1.
- La figure 4 est une vue en coupe d'un exemple d'application au droit d'une vis,
- La figure 5 est une vue en coupe de l'exemple de la figure 4 entre deux vis.

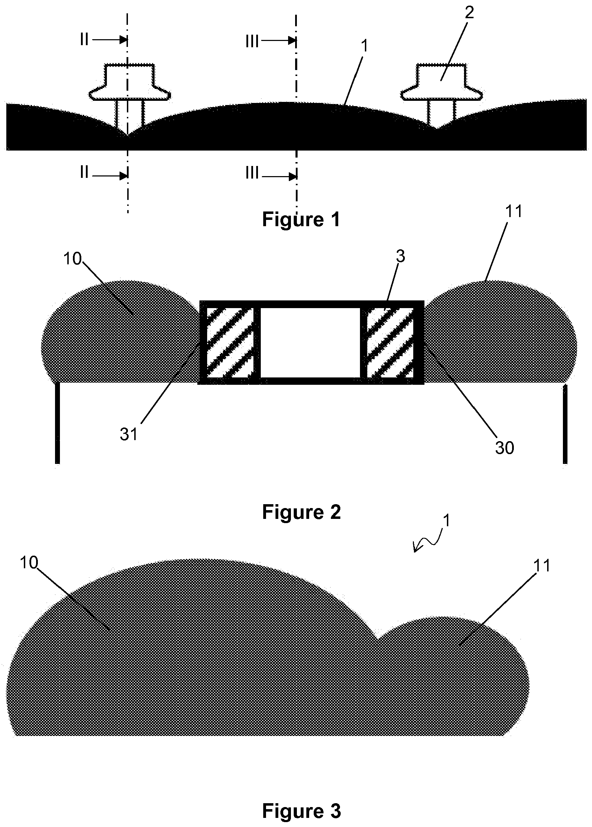

Le joint 1 illustré à la figure 1 présente des vis 2 de fixation au droit desquelles la hauteur du joint 1 est plus faible et qui coopèrent avec des écrous 3 illustrés sur la figure 2.

On peut voir sur la vue en coupe de la figure 3 que le joint 1 comprend deux cordons 10 et 11 de hauteurs différentes. Le cordon 10, le plus haut, a un taux de compression important et permet l'étanchéité statique (type IP 65), tandis que le cordon 11, moins volumineux a un taux de compression moins important et assure la résistance au jet (IP9K). La hauteur du cordon 10 est par exemple de 8mm avec une largeur de 13mm à sa base et dans sa forme définitive (réticulée) tandis que la hauteur du cordon 11 est de 5mm avec une largeur de 5mm dans sa forme définitive (réticulée).

La figure 2 montre le joint 1 au droit d'un écrou 3. L'écrou 3 est situé entre les deux cordons 10 et 11, ceci présente l'avantage de faciliter la réalisation dudit joint 1. En effet, on réalise un premier cordon 10 ou 11 (indifféremment) d'un coté 30 de l'écrou 3, puis le deuxième de l'autre coté 31 de l'écrou 3. L'écrou 3 est ainsi inséré dans le joint 1 entre les deux cordons 10 et 11. Chaque cordon est déposé à l'aide d'un robot qui place la mousse liquide sur une pièce à étanchéifier, pour faire varier la hauteur du cordon, on accélère ou on ralentit la vitesse de passage du robot : quand le robot ralentit la hauteur est plus importante, quand il accélère la hauteur est plus faible.

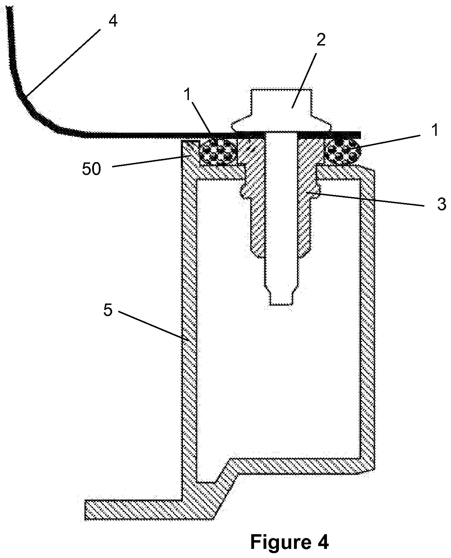

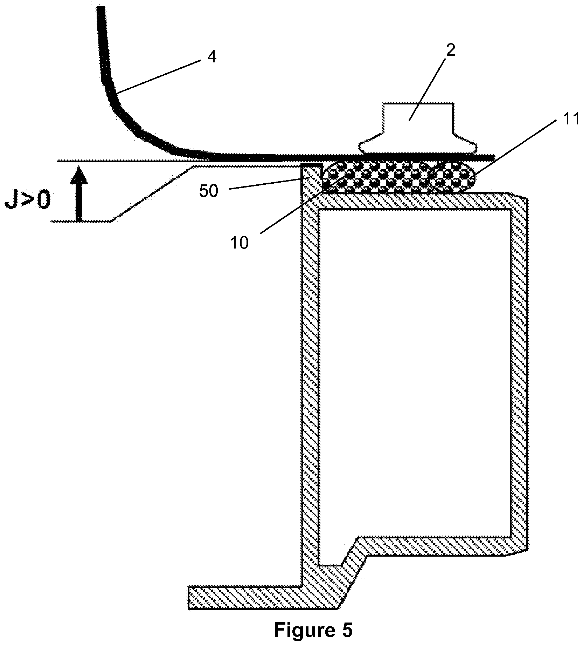

Les figures 4 et 5 illustrent un exemple de réalisation sur un pack de batterie, qui forme une enceinte enfermant des éléments de stockage d'électricité. Le pack comporte un brancard 5 et un couvercle 4. Le couvercle 4 est relié au brancard 5 par une vis 2 et un écrou 3, le joint 1 est disposé entre le brancard 5 et le couvercle 4, et il est limité par un rebord de maintien 50 dont la hauteur est telle que lorsque la vis 2 est serrée et le joint 1 comprimé, il reste un espace J>0 pour assurer une bonne étanchéité.

La pose du joint est faite de la façon suivants :
- on dépose un premier cordon par exemple le cordon 10 entre le rebord de maintien 50 et l'écrou 3 en accélérant au droit des écrous 3 et en ralentissant entre deux écrous 3. On s'assurera que la hauteur du cordon 10 soit suffisante pour couvrir la hauteur de la vis 2.
- Une fois ce premier cordon 10 placé, on dépose rapidement le deuxième cordon 11 de l'autre coté de l'écrou 3 en accélérant au droit des écrous et en ralentissant entre deux écrous 3 afin que ce deuxième cordon 11 puisse se coller au premier cordon 10 entre les écrous 3.
- Le couvercle 4 est ensuite posé sur le brancard 5 où il est vissé.

On voit sur la figure 5 que le cordon 10 d'étanchéité statique est placé du coté du rebord de maintien 50, c'est-à-dire du côté intérieur du pack de batterie, et que le cordon 11 de résistance au jet est placé du côté opposé au rebord de maintien 50, c'est-à-dire du côté extérieur du pack de batterie.

D'autres applications sont possibles hors du secteur automobile comme par exemple des armoires électriques, des éclairages, des filtres et des supports de filtres, des emballages, etc...)

## Revendications

1. Joint (1) d'étanchéité entre deux pièces, ledit joint (1) étant au moins partiellement constitué d'un matériau souple et élastique de type mousse en polyuréthane ou en silicone, **caractérisé en ce qu'**il comprend deux cordons (10, 11) juxtaposés de hauteurs différentes et **en ce que** le premier cordon (10) est dimensionné par une hauteur de mousse supérieure autorisant un taux de compression plus élevé que le deuxième cordon (11) et que ledit deuxième cordon (11) est disposé vers l'extérieur d'une enceinte formée par les deux pièces.

2. Joint (1) d'étanchéité selon la revendication précédente **caractérisé en ce qu'** un premier des cordons (10) est dimensionné par une hauteur de mousse autorisant un taux de compression de 30 à 60% pour le PU .

3. Joint (1) d'étanchéité selon la revendication précédente **caractérisé en ce que** le deuxième cordon (11) est dimensionné par une hauteur de mousse autorisant un taux de compression de 10 à 30% pour le PU .

4. Joint (1) d'étanchéité selon la revendication 1 **caractérisé en ce qu'** un premier des cordons (10) est dimensionné par une hauteur de mousse autorisant un taux de compression de 5 à 20% pour le Sil .

5. Joint (1) d'étanchéité selon la revendication précédente **caractérisé en ce que** le deuxième cordon (11) est dimensionné par une hauteur de mousse autorisant un taux de compression de 5 à 10% pour le Sil .

6. Joint (1) d'étanchéité selon une des revendications précédentes **caractérisé en ce que** le joint (1) est démontable.

7. Joint (1) d'étanchéité selon une des revendications précédentes **caractérisé en ce que** le joint (1) est maintenu en place par des vis (2).

8. Procédé de pose d'un joint (1) d'étanchéité selon une des revendications précédentes **caractérisé en ce qu'**il comprend des étapes de :
- pose d'un premier cordon (10, 11) sous forme de mousse liquide sur l'une des deux pièces,
- pose d'un deuxième cordon (11, 10) sous forme de mousse liquide sur ladite pièce, en contact avec le premier cordon (10, 11) et avant le séchage dudit premier cordon (10, 11) et dimensionné par une hauteur de mousse supérieure autorisant un taux de compression plus élevé pour le premier cordon que pour le deuxième.

9. Procédé selon la revendication précédente **caractérisé en ce que** la pose comprend au moins une étape où la vitesse de pose ou le débit de matière coulée varie.

10. Procédé selon la revendication précédente **caractérisé en ce que** la vitesse de pose augmente aux abords des vis de fixation et diminue entre lesdites vis.

11. Véhicule automobile équipée d'un joint selon une des revendications précédentes.

## Patentansprüche

1. Dichtung (1) zum Abdichten zwischen zwei Teilen, wobei die Dichtung (1) zumindest teilweise aus einem flexiblen und elastischen Material des Typs Polyurethan- oder Silikonschaum besteht, **dadurch gekennzeichnet, dass** sie zwei nebeneinander angeordnete Schnüre (10, 11) mit unterschiedlicher Höhe umfasst und dass die erste Schnur (10) mit einer größeren Schaumhöhe ausgelegt ist, die eine höhere Komprimierungsrate als die zweite Schnur (11) ermöglicht und dass die zweite Schnur in Aussenrichtung eines Gehäuses angebracht ist, das von den beiden Teilen gebildet wird.

2. Dichtung (1) zum Abdichten nach dem vorhergehenden Anspruch, **dadurch gekennzeichnet, dass** eine erste der Schnüre (10) mit einer Schaumhöhe ausgelegt ist, die eine Komprimierungsrate von 30 bis 60 % des Polyurethans ermöglicht.

3. Dichtung (1) zum Abdichten nach dem vorhergehenden Anspruch, **dadurch gekennzeichnet, dass** die zweite Schnur (11) mit einer Schaumhöhe ausgelegt ist, die eine Komprimierungsrate von 10 bis 30 % des Polyurethans ermöglicht.

4. Dichtung (1) zum Abdichten nach Anspruch 1, **dadurch gekennzeichnet, dass** eine erste der Schnüre (10) mit einer Schaumhöhe ausgelegt ist, die eine Komprimierungsrate von 5 bis 20 % des Silikons ermöglicht.

5. Dichtung (1) zum Abdichten nach dem vorhergehenden Anspruch, **dadurch gekennzeichnet, dass** die zweite Schnur (11) mit einer Schaumhöhe ausgelegt ist, die eine Komprimierungsrate von 5 bis 10 % des Silikons ermöglicht.

6. Dichtung (1) zum Abdichten nach einem der vorhergehenden Ansprüche, **dadurch gekennzeichnet, dass** die Dichtung (1) ausbaubar ist.

7. Dichtung (1) zum Abdichten nach einem der vorhergehenden Ansprüche, **dadurch gekennzeichnet, dass** die Dichtung (1) durch Schrauben (2) an ihrem Platz gehalten wird.

8. Verfahren zum Anbringen einer Dichtung (1) nach einem der vorhergehenden Ansprüche **dadurch gekennzeichnet, dass** es die folgenden Schritte umfasst:
- Anbringen einer ersten Schnur (10, 11) in Form von flüssigem Schaum auf einem die beiden Teile,
- Anbringen einer zweiten Schnur (11, 10) in Form von flüssigem Schaum auf dem besagten Teil in Kontakt mit der ersten Schnur (10, 11) und vor dem Trocknen der ersten Schnur (10, 11) und mit einer größeren Schaumhöhe ausgelegt, die eine höhere Komprimierungsrate der ersten Schnur als der zweiten Schnur ermöglicht.

9. Verfahren nach dem vorhergehenden Anspruch, **dadurch gekennzeichnet, dass** das Anbringen mindestens einen Schritt umfasst, bei dem entweder die Anbringgeschwindigkeit oder der Durchsatz der Gießmasse variiert.

10. Verfahren nach dem vorhergehenden Anspruch, **dadurch gekennzeichnet, dass** die Anbringgeschwindigkeit in der Nähe der Befestigungsschrauben erhöht und zwischen den Schrauben verringert ist.

11. Kraftfahrzeug, das mit einer Dichtung nach einem der vorhergehenden Ansprüche ausgestattet ist.

## Claims

1. Seal (1) between two parts, said seal (1) being at least partially constituted of a flexible and elastic material, of the polyurethane or silicon foam type, **characterised in that** it comprises two cords (10, 11) juxtaposed at different heights, and **in that** the first cord (10) is sized by a higher foam height, enabling a compression rate higher than the second cord (11), and that said second cord (11) is arranged towards the exterior of a chamber formed by the two parts.

2. Seal (1) according to the preceding claim, **characterised in that** the first cord (10) is sized by a foam height enabling a compression rate of 30% to 60% for PU.

3. Seal (1) according to the preceding claim, **characterised in that** the second cord (11) is sized by a foam height enabling a compression rate of 10% to 30% for PU.

4. Seal (1) according to claim 1, **characterised in that** the first cord (10) is sized by a foam height enabling a compression rate of 5% to 20% for Sil.

5. Seal (1) according to the preceding claim, **characterised in that** the second cord (11) is sized by a foam height enabling a compression rate of 5% to 10% for Sil.

6. Seal (1) according to one of the preceding claims, **characterised in that** the seal (1) can be removed.

7. Seal (1) according to one of the preceding claims, **characterised in that** the seal (1) is held in place by screws (2).

8. Method for positioning a seal (1) according to one of the preceding claims, **characterised in that** it comprises steps of:
- positioning a first cord (10, 11) in the form of liquid foam on one of the two parts,
- positioning a second cord (11, 10) in the form of liquid foam on said part, contacting the first cord (10, 11) and before the drying of said first cord (10, 11) and sized by a higher foam height enabling a higher compression rate for the first cord than for the second cord.

9. Method according to the preceding claim, **characterised in that** the positioning comprises at least one step where the positioning speed or the speed of material flow varies.

10. Method according to the preceding claim, **characterised in that** the positioning speed increases near the fixing screws and decreases between said screws.

11. Automotive vehicle equipped with a seal, according to one of the preceding claims.
